## Europäisches Patentamt

## European Patent Office

## Office européen des brevets

(19)

(11) Veröffentlichungsnummer: **0 003 279**
**B1**

(12) **EUROPÄISCHE PATENTSCHRIFT**

(45) Veröffentlichungstag der Patentschrift:
12.08.81

(51) Int Cl.³: **H 01 B 13/04**

(21) Anmeldenummer: 79100029.2

(22) Anmeldetag 05.01.79

(54) **Verfahren und Vorrichtung zum lagenweisen SZ-Verseilen von Verseilelementen um einen flexiblen Kernstrang.**

(30) Priorität: 31.01.78 DE 2804480

(43) Veröffentlichungstag der Anmeldung:
08.08.79 Patentblatt 79/16

(45) Bekanntmachung des Hinweises auf die Patenterteilung:
12.08.81 Patentblatt 81/32

(84) Benannte Vertragsstaaten.
**CH FR GB IT SE**

(56) Entgegenhaltungen.
**DE-A-2 150 211**
**DE-A-2 412 514**
**DE-B-1 023 805**
**FR-A-2 291 623**

(73) Patentinhaber: **SIEMENS AKTIENGESELLSCHAFT Berlin
und München, Postfach 22 02 61, D-8000 München 22 (DE)**

(72) Erfinder: **Vogelsberg, Dieter, Fichtestrasse 7,
D-8630 Coburg (DE)**
Erfinder. **Pascher, Helmut, Weilheimer Strasse 19a,
D-8000 München 70 (DE)**

Verfahren und Vorrichtung zum lagenweisen SZ-Verseilen von Verseilelementen um
einen flexiblen Kernstrang

Die Erfindung befaßt sich mit der lagenweisen SZ-Verseilung von Verseilelementen, beispielsweise mit der Verseilung von Verseilelementen elektrischer Kabel wie Drähten. Adern, Aderpaaren oder Sternvierern, oder auch mit der Verseilung von optischen Übertragungselementen für optische Kabel, wie sie neuerdings im Bereich der Nachrichtenkabeltechnik eingesetzt werden. Verfahren und Vorrichtungen zum lagenweisen SZ-Verseilen von Verseilelementen hat man seit den Anfängen der SZ-Verseilung im Auge gehabt und hierbei als eigentliches Verseilorgan im wesentlichen eine mit wechselnder Drehrichtung umlaufende Verseilscheibe vorgesehen.

Eine besondere Schwierigkeit bei der Entwicklung geeigneter Verfahren und Maschinenkonstruktionen für die lagenweise SZ-Verseilung besteht darin, daß die Verseilung zu möglichst großen Abständen der Umkehrstellen der Drallrichtung in dem hergestellten Verseilgut führen soll. Die ursprünglichen Abstände von etwa einer Drallänge (DE-PS 6 31 929) konnten durch Verwendung zusätzlicher Verseilscheiben auf das Zwei- bis Dreifache vergrößert werden. Die zusätzlichen Verseilscheiben bilden dabei vor dem eigentlichen Verseilorgan sowohl eine Einrichtung zur Unterdrückung unerwünschter Verschlingungen des Verseilgutes (DE-OS 18 06 334, DE-OS 18 11 176) als auch eine Art Speichereinrichtung für die von der Verseilscheibe rückwärts ausgeübten Verseilschläge. Im einfachsten Fall ist eine einzige zusätzliche Verseilscheibe vorgesehen, die mit größerem Abstand vor der oszillierenden Verseilscheibe feststehend angeordnet ist und lediglich der definierten Zuführung der Verseilelemente zur oszillierenden Verseilscheibe dient (DE-OS 24 11 151, DE-OS 24 55 062). Zwischen der feststehenden und der oszillierenden Verseilscheibe kann ein Rohr angeordnet sein, auf das die Verseilschläge aufgebracht werden. Die Speicherkapazität eines solchen Rohres ist wegen der Reibungsverluste allerdings gering.

Die Speicherkapazität der vor dem Verseilorgan angeordneten Speichereinrichtung und damit der Abstand der Umkehrstellen der Drallrichtung im Verseilgut kann dadurch vergrößert werden, daß man jedem Verseilelement eine relativ lange flexible Rohrführung zuordnet, die an dem einen Ende mit dem Verseilorgan drehbar und am anderen Ende raumfest gelagert ist (DE-OS 22 62 705). Die Anwendung einer solchen Speichereinrichtung bei der lagenweisen Verseilung von Verseilelementen führt jedoch zu Schwierigkeiten, weil die axial feststehenden flexiblen Rohrführungen hierbei auf den axial transportierten Kernstrang aufgeseilt werden.

Zur normalen SZ-Verseilung von Verseilelementen, bei der also die Verseilelemente nicht lagenweise, sondern direkt (bündelweise) miteinander verseilt werden ist weiterhin eine Vorrichtung bekannt, die als eigentliches Verseilorgan ebenfalls eine oszillierende Verseilscheibe enthält und bei der der Verdrehungswinkel dadurch wesentlich vergrößert ist, daß sich in größerem Abstand vor der Verseilscheibe ein Verseilnippel befindet, in den die Verseilelemente einlaufen. Die von der Verseilscheibe rückwärts ausgeübte Verseilwirkung wird dadurch nicht unterdrückt, sondern wird bewußt herbeigeführt und auf einen längeren Abschnitt des Verseilgutes verteilt (DE-AS 24 54 777).

Die Erfindung geht hiervon aus und bezieht sich damit auf ein Verfahren zum Verseilen von Verseilelementen, insbesondere von Verseilelementen elektrischer Kabel, bei dem die kontinuierlich von raumfest angeordneten Vorräten ablaufenden Verseilelemente zunächst provisorisch mit wechselnder Schlagrichtung verseilt, anschließend vorübergehend gespreizt und danach endgültig mit wechselnder Schlagrichtung verseilt werden. Der Erfindung liegt die Aufgabe zugrunde, ein solches Verfahren dahingehend zu verbessern, daß zur lagenweisen Verseilung in wenigen und einfachen Schritten eine größere Anzahl von Schlaglängen in jeweils einer Schlagrichtung aufgebracht werden kann, so daß der Abstand der Umkehrstellen der Schlagrichtung bzw. der Drallrichtung im fertigen Verseilgut wenigstens mehrere Schlaglängen beträgt.

Zur Lösung dieser Aufgabe ist gemäß der Erfindung vorgesehen, daß zum lagenweisen Verseilen der Verseilelemente auf einen Kernstrang die zunächst provisorisch auf den Kernstrang aufgeseilten und anschließend durch Spreizung vom Kernstrang abgeseilten Verseilelemente nach der Spreizung vorübergehend mit Abstand und parallel zum torsionsfrei geführten Kernstrang geführt werden.

Bei einem derartigen Verseilverfahren wird im Rahmen der provisorischen Verseilung der Verseilelemente auf den Kernstrang dieser selbst als Speicherelement für die von der Verseilscheibe rückwärts ausgeübten Verseilschläge verwendet. Da dieses Speicherelement ohne besondere Maßnahmen fast beliebig lang gewählt werden kann, kann der Abstand der Umkehrstellen der Drallrichtung der endgültigen Verseilung ebenfalls fast beliebig gewählt werden; denn dieser Abstand korrespondiert mit der Kapazität des Speicherelementes. Für die zum Zwecke der vorübergehenden Speicherung von Verseilschlägen auf dem Kernstrang erfolgende Torsion des Kernstranges ist dabei wesentlich, daß die Verseilelemente anschließend nach dem Abseilen vom Kernstrang parallel und mit Abstand zu dem frei tordierbar geführten Kernstrang geführt werden, damit der Kernstrang beim endgültigen Aufseilen der Verseilelemente nicht synchron mit den Verseilelementen um seine eigene Achse rotiert. Eine solche Roation würde nämlich bedeuten, daß der Kernstrang mit der gleichen oder annähernd gleichen Schlaglänge und der gleichen Schlagrichtung tordiert wird, mit der die Verseilelemente auf den Kernstrang aufgeseilt werden, d. h., Verseilelemente wären relativ zum Kernstrang unverseilt.

Zur Ausübung des neuen Verseilverfahrens ist eine Vorrichtung besonders geeignet, die zunächst aus raumfest angeordneten Vorräten für die Verseilelemente, einer Abzug- und Aufwickeleinrichtung für das verseilte Gut und aus einer dazwischen angeordneten Verseileinrichtung besteht und bei der die Verseileinrichtung zur Verseilung der Verseilelemente im wesentlichen eine oszillierende Verseilscheibe und zur Führung der Verseilelemente eine weitere, mit Abstand davor angeordnete Verseilscheibe enthält. In Weiterbildung des Erfindungsgedankens ist vorgesehen, daß die weitere Verseilscheibe mit der oszillierenden Verseilscheibe hinsichtlich deren Drehbewegung mechanisch gekoppelt ist und daß vor der weiteren Verseilscheibe ein Verseilnippel zur Aufnahme sowohl des Kernstrangs als auch der Verseilelemente angeordnet ist, dessen Abstand zur weiteren Verseilscheibe ebenso wie der Abstand der weiteren Verseilscheibe von der oszillierenden Verseilscheibe größer als der Abstand der Drallwechselstellen im fertigen Verseilgut ist.

Eine solche Vorrichtung besteht also hinsichtlich des verseilenden Teils im wesentlichen aus einem Verseilnippel, aus einer dahinter mit Abstand angeordneten oszillierenden Verseilscheibe und aus einer dahinter ebenfalls mit Abstand angeordneten zweiten oszillierenden Verseilscheibe, die mit der erstgenannten Verseilscheibe mechanisch gekoppelt ist. Der Verseilnippel, dem zweckmäßig eine Torsionssperre in Form einer Lochscheibe zugeordnet ist, kann hierbei auch durch eine Lochscheibe ersetzt sein, in der die Verseilelemente einzeln geführt werden; während der Verseilung bildet sich dann hinter der Lochscheibe ein natürlicher Verseilpunkt aus. Hierzu empfiehlt es sich, den Lochkreisdurchmesser möglichst klein zu wählen.

Der Kernstrang, auf den die Verseilelemente aufzuseilen sind, wird durch die drei Elemente Verseilnippel, erste und zweite Verseilscheibe in gestrecktem Zustand hindurchgeführt, wobei der jeweilige, sich zwischen dem Verseilnippel und der ersten Verseilscheibe befindende Abschnitt des Kernstrangs als Träger für die provisorisch aufgebrachten Verseilelemente dient, während die Verseilelemente im Bereich zwischen der ersten Verseilscheibe und der zweiten Verseilscheibe parallel und mit Abstand zum Kernstrang frei durch die Luft oder durch geeignete rohrartige Führungen geführt werden. Die Abstände der weiteren Verseilscheibe von dem Verseilnippel und der oszillierenden Verseilscheibe sind dabei derart zu wählen, daß die Verseilelemente im Bereich zwischen dem Verseilnippel und der weiteren Verseilscheibe mit einer Schlaglänge auf den Kernstrang aufgeseilt werden können, die größer als die Schlaglänge der endgültigen Verseilung ist. Dies wird dadurch erreicht, daß diese Abstände größer als der erwünschte Abstand der Umkehrstellen der Drallrichtung im fertigen Verseilgut bemessen werden. Bei einer solchen Dimensionierung kann man im Bereich zwischen den beiden Verseilscheiben einen weitgehenden Ausgleich der Torsionsspannungen in den Verseilelementen erreichen. In diesem Fall laufen die Verseilelemente mit einer Rückdrehung in den Verseilnippel der eigentlichen Verseilung ein. Dies führt beispielsweise dazu, daß die Umkehrstellen der Drallrichtung weniger zum Aufspringen neigen, als dies ohne Rückdrehung der Fall wäre.

Vorzugsweise wählt man die erwähnten Abstände innerhalb der Verseilvorrichtung gleich groß, wenn man lediglich die Verseilung der Verseilelemente auf den Kernstrang im Auge hat. Wählt man dagegen den Abstand zwischen den beiden Verseilscheiben kleiner als den Abstand zwischen dem Verseilnippel und der weiteren Verseilscheibe, so kann man erreichen, daß auch der Kernstrang eine abschnittsweise wechselnde Schlagrichtung erhält, wobei die Schlaglänge geringer als die Schlaglänge der endgültigen Verseilung der Verseilelemente ist.

Beim Betrieb der Verseilvorrichtung werden die Verseilelemente infolge der Drehbewegung der weiteren Verseilscheibe provisorisch auf den Kernstrang aufgeseilt; infolge dieser Aufseilung wird der Kernstrang im Bereich zwischen dem Verseilnippel und der oszillierenden Verseilscheibe in eine der Drehbewegung der weiteren Verseilscheibe folgende Rotationsbewegung versetzt. Wenn man hierbei der weiteren Verseilscheibe keinen besonderen Verseilnippel zuordnet, wird der Kernstrang im Bereich zwischen dem Verseilnippel und der weiteren Verseilscheibe auf zeitlich wechselnder Länge von den Verseilelementen wendelförmig umschlungen. Ordnet man dagegen unmittelbar vor der weiteren Verseilscheibe einen weiteren Verseilnippel, nämlich einen Abseilnippel an, so wird der Kernstrang stets auf der gesamten Länge zwischen dem Verseilnippel und dem zuletzt genannten Abseilnippel von den Verseilelementen wendelförmig umschlungen.

Zur Unterstützung der von der weiteren Verseilscheibe über die Verseilelemente auf den Kernstrang ausgeübten Torsionsbewegung kann es zweckmäßig sein, zwischen der weiteren Verseilscheibe und dem Verseilnippel einen oder mehrere Verseilköpfe anzuordnen, die das Verseilgut von außen kraftschlüssig umfassen und um die Verseilachse mit wechselnder Drehrichtung umlaufen. Ein erster Verseilkopf wird zweckmäßig unmittelbar vor dem der weiteren Verseilscheibe zugeordneten Verseilnippel angeordnet und führt die gleiche Drehbewegung wie die weitere Verseilscheibe aus. Wahlweise können weitere Verseilköpfe verwendet werden, die je nach örtlicher Anordnung zwischen dem Verseilnippel und der weiteren Verseilscheibe eine Drehzahl zwischen Null und der Drehzahl der weiteren Verseilscheibe aufweisen. Ein in der Mitte zwischen dem Verseilnippel und der weiteren Verseilscheibe angeordneter Verseilkopf würde beispielsweise mit der halben Drehzahl der weiteren Verseilscheibe rotieren. Mit Hilfe derartiger zusätzlicher Verseilköpfe lassen sich die vorübergehend auf den Kernstrang aufgebrachten Verseilschläge der Verseilelemente möglichst gleichmäßig auf dem Kernstrang verteilen.

Bei der weiteren Ausgestaltung der Verseilvorrichtung kann es von Vorteil sein, die weitere Verseilscheibe axial hin und her bewegbar anzuordnen. Die Periode dieser Hin- und Herbewegung ist dann auf die periodische Drehbewegung der weiteren Verseilscheibe abzustimmen. Auch auf diese Weise läßt sich erreichen, daß sich die Verseilschläge der provisorisch aufgeseilten Verseilelemente nicht unmittelbar vor der weiteren Verseilscheibe stauen, sondern daß die Vorverseilung der Verseilelemente mit konstanter Schlaglänge erfolgt.

Unabhängig davon, ob die weitere Verseilscheibe hin und her bewegbar angeordnet ist, empfiehlt es sich zur Vereinfachung der konstruktiven Ausgestaltung, daß die oszillierende Verseilscheibe und die weitere Verseilscheibe die Stirnseiten eines Verseilkorbes bilden, der Führungen für die Verseilelemente enthält. Diese Führungen können im einfachsten Fall aus in den beiden Verseilscheiben angeordneten Bohrungen bestehen, es können aber auch rohrartige Führungen zwischen beiden Verseilscheiben oder weitere mit den beiden Verseilscheiben mechanisch gekoppelte Lochscheiben vorgesehen sein.

Bei der Durchführung des neuen Verseilverfahrens ist die pro Längeneinheit des Kernstranges aufgebrachte Länge der Verseilelemente nach der endgültigen Verseilung größer als im provisorisch verseilten Zustand. Dies führt dazu, daß der Kernstrang im Bereich zwischen der oszillierenden Verseilscheibe und der weiteren Verseilscheibe abschnittsweise gestaucht wird. Es ist deshalb zweckmäßig, den Kernstrang im Bereich zwischen der oszillierenden Verseilscheibe und der weiteren Verseilscheibe in einem Rohr zu führen, an dessen Innenwand er sich wendelförmig anlegen kann. Größere Längendifferenzen zwischen dem Kernstrang und den Verseilelementen können sich hierbei nicht aufsummieren, da die Verseilelemente in Abständen, die dem Abstand der Umkehrstellen der Drallrichtung entsprechen, zwischen dem Verseilnippel und der weiteren Verseilscheibe völlig parallel zur Verseilachse liegen und in diesem Zustand fehlende Längen von den Vorräten der Verseilelemente abgezogen werden können.

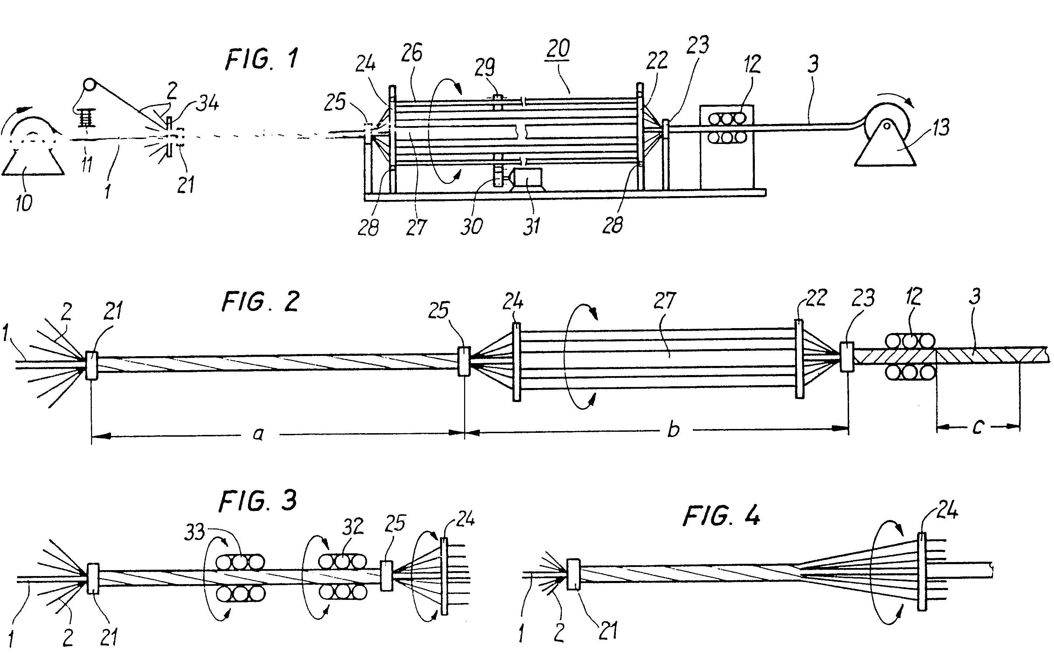

In den Figuren 1 bis 4 sind Ausführungsbeispiele von Vorrichtungen zur Durchführung des neuen Verseilverfahrens dargestellt.

Fig. 1 zeigt eine Vorrichtung, mit der Verseilelemente 2 auf einen Kernstrang 1 mit wechselnder Schlagrichtung zu einer Verseillage aufgeseilt werden und nach der Verseilung das verseilte Gut 3 bilden. Bei den Verseilelementen kann es sich beispielsweise um Drähte für elektrische Leiter von Kabeln, um Adern oder Adergruppen elektrischer Kabel oder auch um Verseilelemente für optische Kabel handeln. Bei dem Kernstrang kann es sich beispielsweise um ein Trag- oder Verstärkungselement, um ein einzelnes oder um mehrere miteinander verseilte Verseilelemente oder um eine Kabelader handeln. Die Verseilelemente laufen von raumfest angeordneten Vorräten 11 ab, während der Kernstrang 1 von der Abwickeleinrichtung 10 abläuft. Kernstrang und Verseilelemente werden von der Abzugeinrichtung 12 abgezogen und mittels der Aufwickeleinrichtung 13 aufgewikkelt.

Das Aufseilen der Verseilelemente 2 auf den Kernstrang 1 erfolgt mit Hilfe der Verseilvorrichtung 20, die einlaufseitig durch den Verseilnippel 21 mit der zugeordneten Lochscheibe 34 und auslaufseitig durch den Verseilnippel 23 begrenzt wird. Das eigentliche Verseilorgan ist ein rotierender Verseilkorb, der von der oszillierenden Verseilscheibe 22, der weiteren Verseilscheibe 24 und den rohrartigen Führungen 26 für die Verseilelemente 2 gebildet wird. Dieser Verseilkorb ist mittels der Lager 28 drehbar gelagert und wird von dem Motor 31 über das Zahnradpaar 29 und 30 mit abschnittsweise wechselnder Drehrichtung angetrieben.

Der Kernstrang 1 durchläuft im Bereich des Verseilkorbes die rohrartige Führung 27, während der weiteren Verseilscheibe 24 ein weiterer Verseilnippel 25 (Abseilnippel) zugeordnet ist.

Beim Betrieb der Verseileinrichtung wird mit Hilfe des Verseilnippels 21 auf den Kernstrang 1 eine größere Zahl von Verseilelementen 2 konzentrisch aufgebracht. Der von der Verseillage umhüllte Kernstrang läuft anschließend eine größere Strecke, beispielsweise einige Meter, frei durch die Luft. Mit Hilfe des Abseilnippels 25 und der abwechselnd rechts und links rotierenden weiteren Verseilscheibe 24 des Verseilkorbes wird die äußere Verseillage wieder abgeseilt. Diese weitere Verseilscheibe 24 läuft synchron mit der oszillierenden Verseilscheibe 22 um, die in einer größeren Entfernung, beispielsweise in einem Abstand von ebenfalls einigen Metern, von der weiteren Verseilscheibe 24 angeordnet ist. Zwischen den beiden Verseilscheiben laufen die einzelnen Verseilelemente mit Abstand und parallel zum Kernstrang frei durch die Luft oder werden einzeln durch Rohrführungen gestützt. Dabei führen alle Verseilelemente eine gemeinsame Drehbewegung um den durch die rohrförmige Führung 27 durchlaufenden Kernstrang 1 aus.

Nach Verlassen der oszillierenden Verseilscheibe 22 wird mittels des Verseilnippel 23 die äußere Verseillage endgültig auf den Kernstrang 1 aufgebracht und erhält dabei eine in Abständen wechselnde Schlagrichtung. Als äußerer Festpunkt für diese Verseilung dient in dem dargestellten Beispiel eine stehende Raupenbandvorrichtung, die vorzugsweise auch als Abzugeinrichtung ausgebildet ist.

Der wesentliche Teil der in Fig. 1 dargestellten Verseilvorrichtung ist in Fig. 2 nochmals schematisch dargestellt, wobei der Abstand a zwischen dem Verseilnippel 21 und dem Abseilnippel 25, der Abstand b zwischen dem Abseilnippel 25 und dem Verseilnippel 23 sowie der Abstand c als Abstand der Umkehrstellen der Drallrichtung im fertigen Verseilgut eingetragen sind. Wesentlich für die Funktion der Verseileinrichtung ist die Wahl der Abstände a, b und c. Der Abstand c der Umkehrstellen der Drallrichtung wird durch die Abzugsgeschwindigkeit v und die Zahl der vom Verseilkorb jeweils in einer Richtung mit konstanter Drehzahl n ausgeführten Drehungen bestimmt. Die Abstände a und b sind größer als der Abstand c, sie betragen beispielsweise das Zwei- bis Zehnfache. Auf diese Weise wird dafür gesorgt, daß die Schlaglänge der provisorischen Verseilung im Bereich zwischen den Verseilnippeln 21 und 25 wesentlich größer als die Schlaglänge der endgültigen Verseilung ist. Die Verseilelemente werden deshalb während der provisorischen Verseilung mechanisch nur schwach durch Torsions- und Biegekräfte beansprucht, und das Wiederaufseilen mittels der weiteren Verseilscheibe bereitet keine Probleme.

Wenn man die Abstände a und b sehr viel größer als den Abstand c wählt, wird auch der Kernstrang 1 vor dem Einlaufen in den Verseilnippel 23 nur mäßig tordiert, d. h., seine Schlaglänge ist dort stets wesentlich größer als die endgültige Schlaglänge der aufgeseilten Verseillage. Hierbei wird eine ausreichende Torsionselastizität des Kernstrangs vorausgesetzt.

Bei der Durchführung des Verseilverfahrens wird die Torsion des Kernstrangs 1 im Bereich zwischen den Verseilnippeln 21 und 25 durch die Drehbewegung der weiteren Verseilscheibe 24 im Zusammenwirken mit den Verseilelementen 1 bewirkt. Eine gute Übertragung der Drehbewegung der Verseilscheibe 24 auf den Kernstrang 1 ist im übrigen dann gewährleistet, wenn der Abstand b ausreichend groß gewählt ist. Es empfiehlt sich hierbei, den weiteren Verseilnippel 25 etwa in der Mitte zwischen den Verseilnippeln 21 und 23 anzuordnen.

Bei der endgültigen lagenweisen SZ-Verseilung der Verseilelemente 2 entstehen wie bei jeder SZ-Verseilung in Abständen Umkehrstellen der Drallrichtung. Um ein späteres Aufseilen dieser Umkehrstellen zu verhindern, kann in bekannter Weise auf die endgültig verseilten Verseilelemente eine Haltewendel aufgesponnen werden, oder es kann ein Klebemittel angewandt werden. Bei der Verseilung blanker Leiter kann auch in Abständen eine Verschweißung der Leiter auf einer Länge von wenigen Zentimetern durchgeführt werden. Gegebenenfalls reicht auch zur Fixierung der Umkehrstellen eine Verdichtung des gesamten Leiterseils aus, wobei sich die einzelnen Leiter ineinander verhaken.

Bei der Herstellung von Leiterseilen verbindet man die dargestellte Verseileinrichtung vorzugsweise mit dem Extrudieren der Isolierschicht. Eine hierbei gegebenenfalls auf das Leiterseil aufgebrachte Kunststoffhaltewendel müßte so weit hitzebeständig sein, daß sie die Extrusionstemperaturen aushält. In gewissen Fällen kann auch eine metallene Haltewendel eingesetzt werden.

Bei der Verseilung und anschließenden Verdichtung von Leiterseilen empfiehlt es sich, den Verdichtungsnippel mit dem Verseilnippel 23 zusammenzufassen. Ein Mehrrollenverdichtungswerkzeug müßte dann unmittelbar hinter dem Nippel 23 angeordnet werden. Dieses Verdichtungswerkzeug würde dann gleichzeitig als Einrichtung dienen, die hinter dem Verseilnippel 23 eine Torsion des mit den Verseilelementen 2 versehenen Kernstrangs 1 verhindert.

Fig. 3 zeigt in schematischer Darstellung, daß zur Unterstützung der mit Hilfe der weiteren Verseilscheibe 24 ausgeübten Verdrehung des Kernstrangs 1 im Bereich zwischen den Verseilnippeln 21 und 25 zusätzliche Verseilköpfe zwischen diesen Verseilnippeln angeordnet sein können. Der unmittelbar vor dem Verseilnippel 25 angeordnete Verseilkopf 32 müßte dabei mit der gleichen Drehzahl wie die Verseilscheibe 24 umlaufen, während der etwa in der Mitte zwischen dem Verseilnippel 21 und dem Verseilnippel 25 angeordnete Verseilkopf 33 etwa mit der halben Drehzahl der Verseilscheibe 24 umläuft.

Fig. 4 zeigt ein Ausführungsbeispiel, bei dem der Aufseilnippel 25 nicht vorgesehen ist. Dadurch wird der Kernstrang 1 im Bereich zwischen dem Verseilnippel 21 und der weiteren Verseilscheibe 24 auf zeitlich unterschiedlicher Länge von den Verseilelementen 2 bedeckt.

Abschließend wird ein Dimensionierungsbeispiel gegeben, das sich auf die Verseilung eines vieldrähtigen Kupfer-Rundleiters für Energiekabel bezieht, der aus 19 Drähten mit je 1,4 mm Durchmesser im Aufbau $1+6+12$ besteht.

$1+6$ Drähte laufen unverseilt als Kernstrang in die Verseilvorrichtung ein; auf den Kernstrang werden 12 Drähte mit wechselnder Schlagrichtung und der Schlaglänge $s = 150$ mm aufgeseilt. Der Abstand der Drallumkehrstellen beträgt 1,50 m, die Abzugsgeschwindigkeit $v_0 = 100$ m/min.

Die Verseileinrichtung besteht aus zwei Verseilscheiben mit je einer Durchführungsöffnung für den Kernstrang und mit je 12 Durchführungsöffnungen für die Drähte. Die Verseilscheiben haben einen gegenseitigen Abstand von 4,50 m. Beide rotieren synchron mit der Drehzahl $n = v/s = 667$ min$^{-1}$ in wechselnder Richtung.

Der Abstand der beiden Verseilnippel 21 und 25 beträgt ebenfalls 4,50 m. Kernstrang und provisorisch aufgebrachte Außenlage wechseln fortlaufend im Bereich zwischen den Verseilnippeln 21 und 25 ihre Schlaglänge zwischen Unendlich und 450 mm. Im Bereich zwischen den Verseilnippeln 25 und 23 wird die vorübergehende Torsion des Kernstrangs praktisch völlig wieder aufgelöst.

## Patentansprüche

1. Verfahren zum Verseilen von Verseilelementen, insbesondere von Verseilelementen elektrischer Kabel, bei dem die kontinuierlich von raumfest angeordneten Vorräten ablaufenden Verseilelemente zunächst provisorisch mit wechselnder Schlagrichtung verseilt, anschließend vorübergehend gespreizt und danach endgültig mit wechselnder Schlagrichtung verseilt werden, dadurch gekennzeichnet, daß zum lagenweisen Verseilen der Verseilelemente auf einen Kernstrang die zunächst provisorisch auf den Kernstrang aufgeseilten und anschließend durch Spreizung vom Kernstrang abgeseilten Verseilelemente nach der Spreizung vorübergehend mit Abstand und parallel zum torsionsfrei geführten Kernstrang geführt werden.

2. Vorrichtung zur Durchführung des Verfahrens nach Anspruch 1, bestehend aus raumfest angeordneten Vorräten (11) für die Verseilelemente (2), einer Abzug- und Aufwickeleinrichtung (12, 13) für das verseilte Gut und aus einer dazwischen angeordneten Verseileinrichtung (20), die zur Verseilung der Verseilelemente im wesentlichen eine oszillierende Verseilscheibe (22) und zur Führung der Verseilelemente eine weitere, mit Abstand davor angeordnete Verseilscheibe (24) enthält, dadurch gekennzeichnet, daß die weitere Verseilscheibe (24) mit der oszillierenden Verseilscheibe (22) hinsichtlich deren Drehbewegung mechanisch gekoppelt ist und daß vor der weiteren Verseilscheibe ein Verseilnippel (21) zur Aufnahme sowohl des Kernstrangs (1) als auch der Verseilelemente (2) angeordnet ist, dessen Abstand (a) zur weiteren Verseilscheibe (24) ebenso wie der Abstand (b) der weiteren Verseilscheibe (24) von der oszillierenden Verseilscheibe (22) größer als der Abstand (c) der Drallwechselstellen im fertigen Verseilgut ist.

3. Vorrichtung nach Anspruch 2, dadurch gekennzeichnet, daß die oszillierende (22) und die weitere Verseilscheibe (24) die Stirnseiten eines Verseilkorbes bilden, der Führungen (26) für die Verseilelemente enthält.

4. Vorrichtung nach Anspruch 2 oder 3, dadurch gekennzeichnet, daß die weitere Verseilscheibe axial hin und her bewegbar angeordnet ist.

5. Vorrichtung nach einem der Ansprüche 2 bis 4, dadurch gekennzeichnet, daß unmittelbar vor der weiteren Verseilscheibe (24) ein Abseilnippel (25) angeordnet ist.

6. Vorrichtung nach einem der Ansprüche 2 bis 5, dadurch gekennzeichnet, daß zwischen der weiteren Verseilscheibe (24) und dem mit Abstand angeordneten Verseilnippel (21) ein oder mehrere, das gestreckt geführte Verseilgut (Kernstrang und Verseilelemente) von außen kraftschlüssig umfassende, um die Verseilachse mit wechselnder Drehrichtung umlaufende Verseilköpfe (32, 33) angeordnet sind.

7. Vorrichtung nach einem der Ansprüche 2 bis 6, dadurch gekennzeichnet, daß zwischen der oszillierenden und der weiteren Verseilscheibe eine rohrförmige Führung (27) für den flexiblen Kernstrang (1) angeordnet ist.

## Claims

1. A process for stranding cable elements, for example cable elements for electrical cables, wherein the cable elements, which continually feed from stationary supplies, are provisionally stranded in alternating directions, are then temporarily spread apart and then finally stranded with alternating directions of application, characterised in that, in order that the cable elements may be stranded section by section on a core member, the cable elements are firstly provisionally stranded onto the core member, are stranded from the core member by being spread apart, and are then, following the spreading process, temporarily conducted at a distance from and in parallel to the core member which is conducted in a torsion-free manner.

2. A device for the implementation of the process claimed in claim 1, consisting of stationary supplies (11) which are provided for the cable elements (2), further consisting of a device (12, 13) for withdrawing and applying the stranded material and of an intermediately arranged stranding device (20) which, for the stranding of the cable elements, fundamentally contains an oscillating stranding disc (22) and for the guidance of the cable elements contains a further stranding disc (24) arranged at an interval before the former, characterised in that the further stranding disc (24) is mechanically coupled to the oscillating stranding disc (22) in respect of its rotary movement, and in that in front of the further stranding disc there is arranged a stranding nipple (21) which serves to receive both the core member (1) and the stranding elements (2), and whose distance (a) from the further stranding disc (24), and also the distance (b) of the further stranding disc (24) from the oscillating stranding disc (22), exceed the spacing (c) of the twist alternation points in the finished stranded material.

3. A device as claimed in claim 2, characterised in that the oscillating stranding disc (22) and the further stranding disc (24) form the end sides of a carriage which contains guides (26) for the stranding elements.

4. A device as claimed in claim 2 or 3, characterised in that the further stranding disc is arranged so as to be movable back and forth in the axial direction.

5. A device as claimed in any one of claims 2 to

4, characterised in that a destranding nipple (25) is arranged directly prior to the further stranding disc (24).

6. A device as claimed in any one of claims 2 to 5, characterised in that between the further stranding disc (24) and the stranding nipple (21) at a distance therefrom is arranged one or more than one stranding head (32, 33) which grips the stranded material (core member and stranding elements) which is conducted in taut fashion from the exterior in force locking fashion and which rotates around the stranding axis with alternating direction of rotation.

7. A device as claimed in any one of claims 2 to 6, characterised in that a tubular guide (27) for the flexible core member (1) ist arranged between the oscillating stranding disc and the further stranding disc.

**Revendications**

1. Procédé pour le câblage ou toronnage d'éléments de câblage, plus particulièrement d'éléments de câblage de câbles électriques, dans lequel les éléments de câblage dévidés de façon continue à partir de réserves fixes dans l'espace, sont câblés d'abord provisoirement suivant des sens alternés du pas de câblage, puis sont passagèrement épanouis et sont finalement câblés suivant des sens alternés du pas de câblage, caractérisé par le fait que pour le câblage en cuoches consécutives des éléments de câblage sur le brin central, les éléments de câblage câblés d'abord provisoirement sur le brin central et détachés ensuite de ce dernier par épanouissement, sont, après épanouissement, passagèrement guidés parallèlement et avec un certain écartement par rapport au brin central guidé sans torsion.

2. Dispositif pour la mise en oeuvre du procédé selon la revendication 1, constitué par des bobines débitrices (11) fixes dans l'espace pour les éléments de câblage (2), par un dispositif de tirage et d'enroulement (12, 13) pour le produit câblé et par un dispositif de câblage (20) disposé entre les bobines débitrices et le dispositif de tirage et d'enroulement et comportant, pour le câblage des éléments de câblage, pour l'essentiel un disque de câblage oscillant (22) et, pour le guidage des éléments de câblage, un second disque de câblage (24) situé à une certaine distance du précédent, caractérisé par le fait que le second disque de câblage (24) est accouplé au disque de câblage oscillant (22) du point de vue du mouvement de roation de ce dernier et qu'en avant du second disque de câblage (24) est prévue une filière d'assemblage (21) destinée à recevoir aussi bien le brin central (1) que les éléments de câblage (2) et dont la distance (a) audit second disque de câblage (24) de même que la distance (b) entre ledit second disque de câblage (24) et ledit disque de câblage oscillant (22) sont supérieures à la longueur (c) entre les points d'inversion de la torsion dans le produit câblé.

3. Dispositif selon la revendication 2, caractérisé par le fait que ledit disque oscillant (22) et ledit second disque (24) forment les faces frontales d'une cage d'assemblage qui comporte des guidages (26) pour les éléments de câblage.

4. Dispositif selon la revendication 2 ou 3, caractérisé par le fait que ledit second disque de câblage (24) est monté de façon à pouvoir être déplacé axialement dans un sens et dans l'autre.

5. Dispositif selon l'une des revendications 2 à 4, caractérisé par le fait qu'immédiatement à l'avant dudit second disque de câblage (24) est disposée une filière de détoronnage (25).

6. Dispositif selon l'une des revendications 2 à 5, caractérisé par le fait qu'entre ledit second disque de câblage (24) et la filière d'assemblage (21) qui est située à une certaine distance de ce dernier sont prévues une ou plusieurs têtes de câblage enserrant de l'extérieur et avec transmission de force le produit câblé (brin central et éléments de câblage) guidé sans mou et tournant suivant des directions alternées autour de l'axe de câblage.

7. Dispositif selon l'une des revendications 2 à 6, caractérisé par le fait qu'entre le disque de câblage oscillant et le second disque de câblage est prévu un guidage tubulaire (27) pour le brin central (1) flexible.

FIG. 1

FIG. 2

FIG. 3

FIG. 4